# EUROPEAN PATENT SPECIFICATION

(11) **EP 3 038 782 B1**
(45) Date of publication and mention of the grant of the patent: **13.11.2019**
(21) Application number: 14786291.6
(22) Date of filing: 27.08.2014
(51) Int. Cl.: B23D 61/18, B23D 65/00, B28D 1/12, F16G 11/02

(54) **METHOD FOR MANUFACTURING A DIAMOND WIRE FOR CUTTING STONE MATERIAL AND DIAMOND WIRES THUS OBTAINED**
VERFAHREN ZUR HERSTELLUNG EINEN DIAMANTDRAHTES ZUM SCHNEIDEN VON STEINMATERIAL UND SO ERHALTENE DIAMANTDRÄHTE
MÉDODE POUR LA RÉALISATION D'UN FIL DIAMANTÉ POUR LA COUPE DE MATÉRIAUX PIERREUX ET FILS DIAMANTÉS AINSI OBTENUS

(30) Priority: 27.08.2013 IT TV20130138
(43) Date of publication of application: 06.07.2016
(73) Proprietor: Boart & Wire S.r.l., 36030 Fara Vicentino (VI) (IT)
(72) Inventor: RUARO, Carlo, I-36042 Breganze (Vicenza) (IT)
(74) Representative: Bellemo, Matteo
(86) International application number: PCT/IB2014/064088
(87) International publication number: WO 2015/028950

(56) References cited:
- WO-A1-2012/052952
- WO-A1-2012/142633
- WO-A1-2012/174577
- DE-A1- 2 517 496
- JP-U- H04 122 416
- US-A- 2 959 436

## Description

The present invention relates to a method for manufacturing a diamond wire according to the preamble of claim 1, for cutting stone material and the diamond wires thus obtained.

As is known, in order to manufacture a diamond wire, firsdy it is required to produce composite elements, each of which comprises a diamond bead inside which a support bush is inserted and fixed. Thereafter a steel cable with a diameter slightly smaller than the inner diameter of the bushes is inserted inside a plurality of composite elements.

The cable is then joined at the two ends so as to form a ring suitable for being wound onto the pulleys of the cutting machines.

The composite elements comprising a bead and bush are arranged spaced at regular intervals and finally the whole assembly is coated with a polymer material which covers completely the steel cable and partially the bush-and-bead composite elements, with the exception obviously of the bead.

For this purpose injection moulds may be used, wherein the polymer material is injected inside them, which covers the steel cable and penetrates deep into the small gap formed between cable and bushes so as to fix permanently the composite bush-and-bead elements to the steel cable.

The steel cable consists of a plurality of strands which are woven together and are each formed by various steel wires which are also interwoven.

In order to form the joint between the two ends of the cable and create the abovementioned ring, the so-called splicing technique is used, namely the various ends of the strands are interwoven using a very precise and well-established technique.

The steel cable consists usually of seven strands, i.e. one central strand and six outer strands which are wound around the central strand. Each strand in turn consists usually of seven wires so that forty-nine steel wires may be present in a steel cable.

As is known per se to the person skilled in the art, the compositions may differ and therefore both the number of strands and the number of wires per strand may vary, for example there may be a total of 61, 90 or 133 wires.

With the splicing operation only the outer strands of the two ends are interwoven, while the two ends of the central strand are simply positioned end-to-end, namely in an adjacent and aligned manner.

The six outer strands are interwoven so that their end portions are superimposed along a length of about three metres and the cut end of one strand is placed against the cut end of the other strand and so on so as to form a single unit. It is therefore evident that the diameter of the cable remains more or less constant along the whole of its length.

At the end there are six points in the steel cable where there are two strand ends arranged end-to-end, and the cable is perfectly regular and uniform, except for these interruption points.

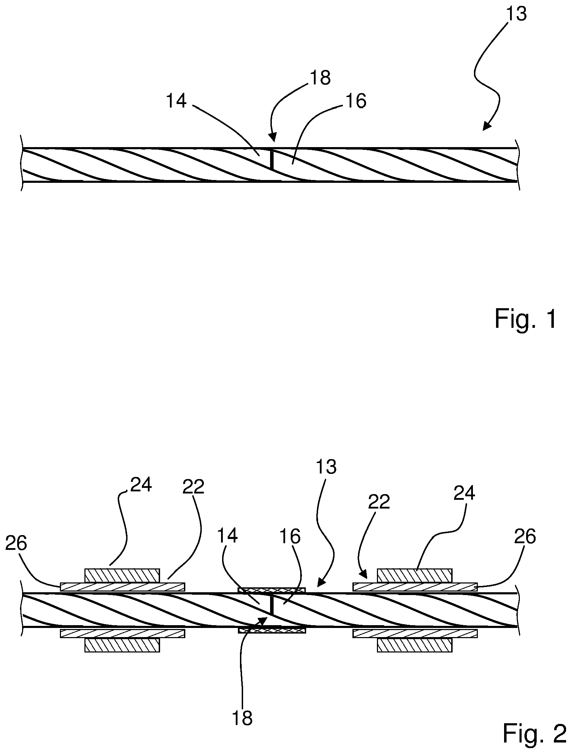

In figure 1 it is shown in diagrammatic form an example of a steel cable 13 in which two strand ends 14, 16 arranged end-to-end along the interruption line 18 can be seen.

The splicing operation is a delicate and very important operation which must carried out in the correct manner. However, no matter how correctly this operation is carried out, it always creates a weak part in the diamond wire.

In fact, the six interruption points, where the cut ends of the strands are arranged end-to-end, form a preferential breakage point. Considering the significant stresses involved, and in particular the high tension to which the diamond wire is subject, the fatigue stress following winding around the pulleys and the wear following cutting of the blocks of stone material, it is clear that the strands with time tend to fray at their cut ends, no longer performing their function in a suitable manner.

Not even the polymer coating is able to help limit this problem and much less so solve it.

In the present state of the art some attempts to solve this problem are known, for example by positioning the interruptions in such a way that they are aligned with a composite bush-and-bead element and are therefore covered by the element.

However, this solution has proved to be not very effective since a small amount of play nevertheless remains between bush (which is a rigid element) and steel cable, so that with time a relative movement of bush and steel cable occurs, this giving rise to the risk of fraying of the adjacent ends of the strands. It has also been noted that in some cases the fraying is even increased owing to the friction between the ends and the bush.

For this reason, generally the interruption points are positioned between one composite bush-and-bead element and the next one.

Document WO 2012/142633 A1 discloses a diamond wire for cutting stone material comprising a multi-strand steel cable joined at the ends by means of splicing so as to form a ring and provided with a number of strand interruption points wherein two strands ends are arranged end-to-end; said interruption points being spaced along the steel cable; a plurality of bead elements arranged on said steel cable; a number of reinforcing elements positioned on single strands each above a respective interruption point, so as to cover the section of the single strands at said interruption point.

The object of the invention is therefore to solve the drawbacks of the prior art, by attempting to eliminate these critical points in the diamond wire and attempting to increase as far as possible the working life thereof.

According to the invention, there is provided a method according to claim 1 for manufacturing a diamond wire for cutting stone material and a diamond wire according to claim 12. Preferred embodiments are defined by the features of the dependent claims 2-11 and 13-18.

The characteristic features and advantages of the method and the diamond wire according to the present invention will emerge more clearly from the description, provided hereinbelow, of a number of examples of embodiment provided by way of a non-limiting illustration with reference to the accompanying drawings, in which:
Fig. 1 shows a steel cable with two strands arranged end-to-end;
Fig. 2 shows in diagrammatic form a part of a diamond wire according to the present invention before the plastic-coating step;
Fig. 3 shows in diagrammatic form a diamond wire according to the present invention after the plastic-coating step;
Fig. 4 shows in diagrammatic form a cross-section of a reinforcing element according to the present invention;
Fig. 5 shows in diagrammatic form a perspective view of a reinforcing element according to the present invention;
Fig. 6 shows in diagrammatic form a reinforcing element in position on a steel cable before the plastic-coating step;
Fig. 7 shows in diagrammatic form a possible embodiment of a reinforcing element in position on a steel cable before the plastic-coating step;
Figs. 8 and 9 show two configurations of a possible embodiment of a reinforcing element according to the present invention; and
Fig. 10 shows a possible embodiment of a reinforcing element according to the present invention.

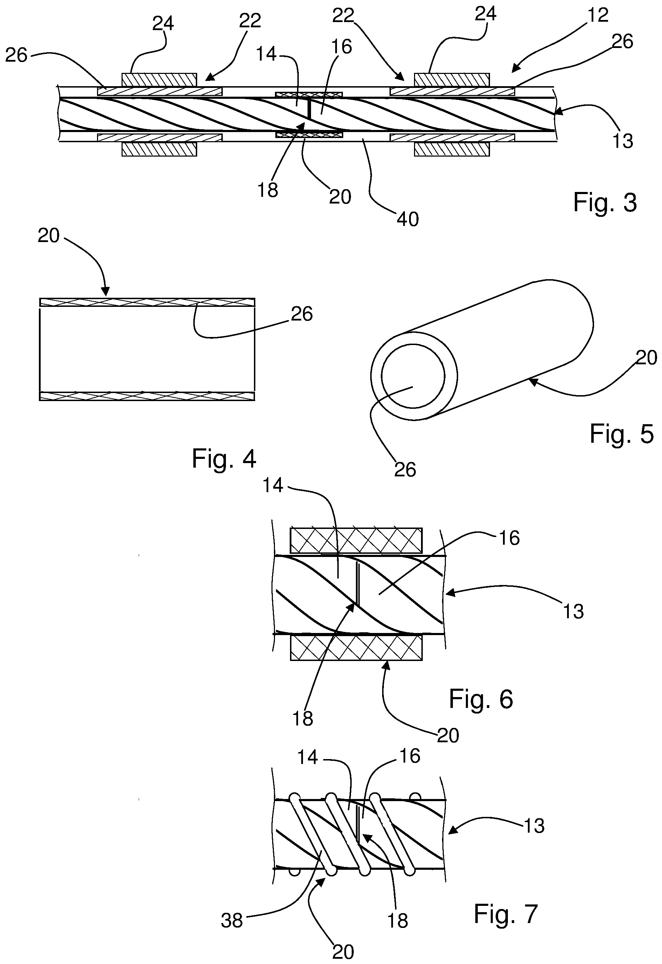

Fig. 3 shows in diagrammatic form a diamond wire for cutting stone material according to the present invention, indicated generally by the reference number 13.

With particular reference to Figure 1, a diamond wire 12 comprises a steel cable 13 composed of a plurality of strands (visible in Figure 1). Each strand is composed of a plurality of steel wires (even though for simpler illustration the plurality of wires for each strand is not shown). As mentioned further above, the number of strands and wires for each steel cable 13 may vary depending on specific requirements.

In accordance with a possible embodiment of the present invention, the steel cable 13 may comprise seven strands, one of which is central and six outer strands which surround the central strand. Advantageously each strand may in turn consist of seven wires.

In accordance with alternative embodiments of the present invention, the number of strands and wires per strand may vary, for example there may be a total of 61, 90 or 133 wires.

In order to close the cable in ring form, the technique of splicing is used, in a manner known per se. By performing splicing, in the manner indicated at the start of the present description, each outer strand will have an interruption, characterized by two strands ends 14, 16 arranged end-to-end, resulting in an interruption point, indicated by the reference number 18 in Figures 1, 2, 3, 6 and 7. In accordance with a preferred embodiment of the present invention, the two ends 14, 16 do not belong to the same strand.

In the embodiment with seven strands (one central strand and six outer strands) there will be six interruption points 18, i.e. one for each outer strand.

The six interruption points are not concentrated in a short section of steel cable, but are distributed along the section of steel cable where the two ends thereof are superimposed during the splicing step. Advantageously, the two ends of the cable may be superimposed over a length of about 3 metres. The six interruption points will be distributed over the whole section.

Advantageously, the interruption points 18 are arranged at regular intervals along the section of steel cable 13 where the two ends 14, 16 thereof are superimposed.

As will be evident to the person skilled in the art, the diameter of the cable is more or less constant over its whole length.

Before performing joining together of the steel cable in ring form by means of splicing, the steel cable is inserted inside the hole of the composite bush-and-bead elements 22 assembled beforehand.

As mentioned above, each composite bush-and-bead element 22 comprises a diamond-lined bead 24 inside which a bush 26 is inserted, said bush having an inner diameter slightly greater than the outer diameter of the cable 13 which will be inserted inside it. The bush 26 is fixed to the diamond-lined bead 24 in a manner known per se.

Since the method of assembling the composite bush-and-bead elements 22 is a method which is per se known to the person skilled in the art, it will not be further described.

According to the invention reinforcing elements 20 are arranged on the interruption points 18 of the strands so as to cover the section of steel cable 12 at the interruption point 18. Figures 2, 3, 4, 5 and 6 show in diagrammatic form a reinforcing element 20.

In accordance with a possible embodiment of the present invention, the reinforcing element may be as long as the interspace between the bushes. Advantageously, the outer diameter of the reinforcing element may be slightly smaller than that of the bush.

In accordance with a first embodiment of the present invention, the reinforcing element 20 is positioned on an interruption point 18 before the steel cable 12 is joined to form a ring. The reinforcing elements 20 are therefore positioned in a manner similar to that of the composite bush-and-bead elements 22.

Advantageously, the reinforcing element 20 may have a substantially cylindrical form, with a central hole 26 inside which the steel cable 12 is inserted (see Figs. 4 and 5).

In accordance with possible embodiments of the present invention, the reinforcing element 20 may be a woven or mesh element made using threads of interwoven material, for example metallic material such as steel. Advantageously, the reinforcing element 20 may be a woven element, made using threads of interwoven material such as high-strength polymer material, for example nylon or aramid fibre. The woven element must adhere as closely as possible to the steel cable section adjacent to the interruption point.

Advantageously, the woven or mesh reinforcing element 20 may consist of a heat-shrinkable polymer so that, once positioned, it may be heated to adhere as closely as possible to the steel cable.

In accordance with an alternative embodiment of the present invention, shown in diagrammatic form in Figure 7, the reinforcing element 20 may be a so-called reinforcing "enlacement" 38 formed by a steel wire wound spirally around the steel cable. The cross-section of the steel wire may be circular, but is preferably rectangular. The turns are wound so as to adhere as tighdy as possible to the steel cable. Advantageously, the steel wire used for the enlacement may have a diameter of between 0.3 and 0.5 mm, and even more advantageously in the region of 0.4 mm.

In accordance with a further embodiment of the present invention, the reinforcing element may consist of a rigid covering band (not shown), for example a strip of polymer material which is wound around the cable section adjacent to the interruption point and on the interruption point itself.

These solutions, while being effective, envisage however that the cable is inserted inside the woven element or mesh element at the same time as the composite bush-and-bead elements and therefore before performing splicing.

This operation complicates the production process since it is required to fit at the same time the reinforcing elements 20 and the composite bush-and-bead elements 22 in a well-defined sequence and, thereafter, perform the joining step by means of splicing.

This operation is long and laborious.

Moreover, the operator who performs the operation could forget to insert one or more of the reinforcing elements 20.

Therefore the idea which has occurred is that of designing also a reinforcing element 20 which may be positioned on the interruption points 18 after splicing of the steel cable.

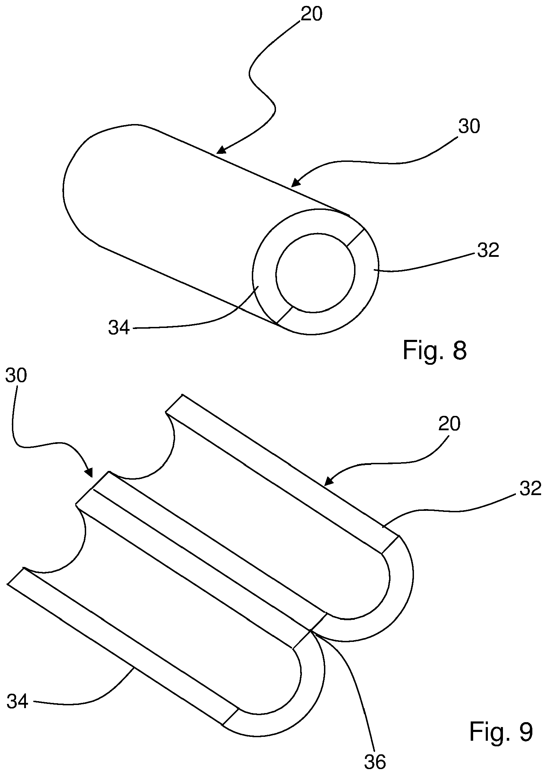

In accordance with a possible embodiment of the present invention, the reinforcing element may consist of a sleeve 30 which can be opened and closed as shown in diagrammatic form in Figures 8 and 9. The sleeve 30 may be made of metallic material, polymer material or other material. Advantageously, the sleeve 30 is a substantially cylindrical element with a through-hole, on which the steel cable section with the interruption point is positioned. The sleeve may be formed by two parts, preferably two halves 32, 34 which are joined together along a generatrix 36. The joint is such as to allow opening and closing of the sleeve 30. Advantageously, locking in the closed position may be obtained by means of a form-fit or in some other way which, considering the description provided above of the characteristic features of the sleeve, will be obvious to the person skilled in the art. For example by means of an outer covering band, snap-fit, etc.

In this case also the sleeve may consist of heat-shrinkable material in a manner per se well known to the person skilled in the art.

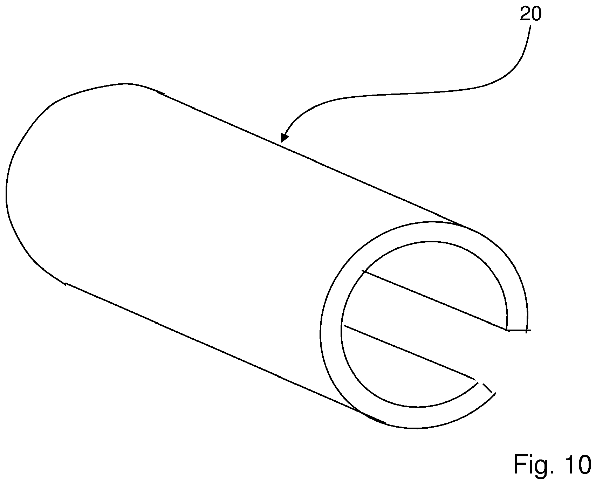

In a further embodiment, shown in diagrammatic form in Figure 10, the reinforcing element, which is made of a material with a sufficient elasticity such as metallic material, polymer material or some other material, may be a cylinder which is slitted and therefore has an opening or aperture along its generatrix which is smaller than the diameter of the steel cable. In this way, by means of elastic deformation of the reinforcing element 20, the opening may be expanded and the steel cable inserted inside, said opening then closing up elastically around the cable and thus remaining tightly fixed thereto.

The last step consists of plastic-coating of the whole of the steel wire onto which the composite bush-and-bead elements 22 and the reinforcing elements 20 have been fitted.

Plastic-coating, which is normally performed by means of an injection process, has the function of stably fixing the composite bush-and-bead elements 22 and the reinforcing elements 20 to the cable. In figure 3 it is shown an example of a diamond wire to which a plastic-coating layer 40 has been applied. Advantageously, the polymer material may have an outer diameter the same as that of the bush, and the reinforcing elements may be completely embedded in the plastic. Since plastic-coating is a method known per se to the person skilled in art, it will not be further described. Advantageously, the injected plastic may form a small tube with a diameter of 5 mm

Below a number of numerical values are indicated, merely by way of example, for some of the parameters of the invention:
- rope cable diameter: 3.5 mm
- bush length: 12 mm
- inner diameter of bush: 4.0 mm
- outer diameter of bush: 5.0 mm
- outer diameter of bead: 7.3 mm
- length of bead: 7 mm; and
- interspace between the bushes: 15 mm

The advantages of the present invention compared to the prior art are therefore clear.

Firstly it has been found that, during practical application, the diamond wire has a longer working life than the diamond wires of the prior art, where the interruption points 18 do not have a specific protection, and a diamond wire where the composite bush-and-bead elements are positioned on these interruption points.

The elasticity of the reinforcing element when following the movements of the diamond wire, for example when passing around the pulleys onto which the wire is wound, allows to greatly increase the working life of the diamond wire.

Moreover, the method may be easily implemented also by unskilled personnel and it may be carried out both before and after the steel cable has been joined together.

The main advantage of the invention consists in the strengthening of the interruption points, namely the points where the cut ends of the strands are arranged end-to-end, such as to reduce to a minimum the risk of premature-breakage of the diamond wire.

The person skilled in the art, in order to satisfy specific requirements, may make modifications to the embodiments described above and/or replace the parts described with equivalent parts, without thereby departing from the scope of the accompanying claims.

For example, solutions (not shown in the accompanying figures) may be envisaged where the reinforcing element is provided on the bush of the composite bush-and-bead element.

Constructional solutions may be envisaged where not all the interruption points are covered with a reinforcing element. Moreover, other solutions may be envisaged where the interruption points of a steel cable are covered with reinforcing elements which are different from each other.

## Claims

1. Method for manufacturing a diamond wire (12) for cutting stone material, comprising the steps of:
- producing a plurality of composite bush-and-bead elements (22);
- inserting a steel cable (13) inside the plurality of composite bush-and-bead elements (22);
- splicing the two ends of the steel cable (13) thus forming a number of strands interruption points (18) wherein two strands ends (14, 16) are arranged end-to-end; said interruption points (18) being spaced along the steel cable (13); and
- applying a plastic-coating (40) onto the steel cable (13) via injection moulding;
said method being **characterized by** additionally comprising, prior to the step of applying the plastic-coating (40), the step of placing a number of reinforcing elements (20) on the steel cable (13) each above a respective interruption point (18), so as to cover the section of the steel cable (13) at the interruption point (18), and so that said plastic-coating (40) can at least partially cover said composite bush-and-bead elements (22) and said reinforcing elements (20) and also stably fix said composite bush-and-bead elements (22) and said reinforcing elements (20) onto said steel cable (13) .

2. Method according to Claim 1, **characterized in that** the step of positioning the reinforcing elements (20) on the steel cable (13) is performed prior to the splicing step.

3. Method according to Claim 1, **characterized in that** the step of positioning the reinforcing elements (20) on the steel cable (13) is performed after the splicing step.

4. Method according to anyone of Claims 1 or 2, **characterized in that** the reinforcing element (20) is a woven element made using interwoven threads of metallic material.

5. Method according to anyone of Claims 1 or 2, **characterized in that** the reinforcing element (20) is a woven element made using interwoven threads of polymer material.

6. Method according to anyone of Claims 1 or 2, **characterized in that** the reinforcing element (20) is a woven element made using interwoven threads of heat-shrinkable polymer material.

7. Method according to anyone of Claims 1 or 3, **characterized in that** the reinforcing element (20) is a reinforcing enlacement (38).

8. Method according to Claim 7, **characterized in that** the reinforcing enlacement (38) is formed by means of a steel wire wound spirally around the steel cable.

9. Method according to either one of Claims 1 or 3, **characterized in that** the reinforcing element (20) consists of a sleeve (30), said sleeve (30) being a substantially cylindrical element provided with a through-hole and comprising means for inserting the steel cable section on which me interruption point (18) is situated.

10. Method according to Claim 9, **characterized in that** said means for inserting the steel cable section on which the interruption point (18) is situated are formed by means of division of the sleeve into two parts, said two parts being joined together along a generatrix (36) such that the sleeve can be opened and closed by means of suitable closing means.

11. Method according to Claim 9, **characterized in that** said means for inserting the steel cable section on which the interruption point (18) is located are formed by means of a slit along a generatrix thereof.

12. Diamond wire (12) for cutting stone material comprising:
- a multi-strand steel cable (13) joined at the ends by means of splicing so as to form a ring and provided with a number of strand interruption points (18) wherein two strands ends (14, 16) are arranged end-to-end; said interruption points (18) being spaced along the steel cable (12);
- a plurality of composite bush-and-bead elements (22) arranged on said steel cable;
- a number of reinforcing elements (20) positioned on the steel cable (13) each above a respective interruption point (18), so as to cover the section of steel cable (13) at said interruption point (18); and
- a plastic-coating (40) which is injection moulded onto the steel cable (13) so as to at least partially cover and stably fix said plurality of composite bush-and-bead elements (22) and said reinforcing elements (20) on the said steel cable (13).

13. Diamond wire according to Claim 12, **characterized in that** the reinforcing element (20) is a woven element made using interwoven threads of metallic material.

14. Diamond wire according to Claim 12, **characterized in that** the reinforcing element (20) is a woven element made using interwoven threads of polymer material.

15. Diamond wire according to Claim 12, **characterized in that** the reinforcing element (20) is a woven element made using interwoven threads of heat-shrinkable polymer material.

16. Diamond wire according to Claim 12, **characterized in that** the reinforcing element (20) is a reinforcing enlacement (38).

17. Diamond wire according to Claim 16, **characterized in that** the reinforcing enlacement (38) is formed by means of a steel wire wound spirally around the steel cable.

18. Diamond wire according to Claim 12, **characterized in that** the reinforcing element (20) consists of a sleeve (30), said sleeve (30) being a substantially cylindrical element with a through-hole, on which the steel cable section with the interruption point (8) is positioned; said sleeve consisting of two parts joined together along a generatrix (36).

## Patentansprüche

1. Verfahren zum Herstellen eines Diamantdrahtes (12) zum Schneiden von Steinmaterial, mit den Schritten:
- Herstellen mehrerer Buchsen-Wulst-Verbundelemente (22);
- Einführen eines Stahlkabels (13) in die mehreren Buchsen-Wulst-Verbundelemente (22);
- Spleißen der beiden Enden des Stahlkabels (13), um eine Anzahl von Strangunterbrechungsstellen (18) zu bilden, an denen zwei Strangenden (14, 16) mit den Enden aneinander angeordnet sind, wobei die Unterbrechungsstellen (18) entlang des Stahlkabels (13) beabstandet sind; und
- Aufbringen einer Kunststoffbeschichtung (40) auf das Stahlkabel (13) durch Spritzgießen;
wobei das Verfahren **dadurch gekennzeichnet ist, dass** es zusätzlich vor dem Schritt zum Aufbringen der Kunststoffbeschichtung (40) den Schritt zum Anordnen mehrerer Verstärkungselemente (20) auf dem Stahlkabel (13) jeweils über einer entsprechenden Unterbrechungsstelle (18) aufweist, um den Abschnitt des Stahlkabels (13) an der Unterbrechungsstelle (18) abzudecken, derart, dass die Kunststoffbeschichtung (40) die Buchsen-Wulst-Verbundelemente (22) und die Verstärkungselemente (20) zumindest teilweise abdecken kann und außerdem die Buchsen-Wulst-Verbundelemente (22) und die Verstärkungselemente (20) auf dem Stahlkabel (13) stabil fixieren kann.

2. Verfahren nach Anspruch 1, **dadurch gekennzeichnet, dass** der Schritt zum Anordnen der Verstärkungselemente (20) auf dem Stahlseil (13) vor dem Spleißschritt ausgeführt wird.

3. Verfahren nach Anspruch 1, **dadurch gekennzeichnet, dass** der Schritt zum Anordnen der Verstärkungselemente (20) auf dem Stahlseil (13) nach dem Spleißschritt ausgeführt wird.

4. Verfahren nach Anspruch 1 oder 2, **dadurch gekennzeichnet, dass** das Verstärkungselement (20) ein gewebtes Element ist, das unter Verwendung von miteinander verwobenen Fäden aus einem Metallmaterial hergestellt ist.

5. Verfahren nach einem der Ansprüche 1 oder 2, **dadurch gekennzeichnet, dass** das Verstärkungselement (20) ein gewebtes Element ist, das unter Verwendung von miteinander verwobenen Fäden aus einem Polymermaterial hergestellt ist.

6. Verfahren nach Anspruch 1 oder 2, **dadurch gekennzeichnet, dass** das Verstärkungselement (20) ein gewebtes Element ist, das unter Verwendung von miteinander verwobenen Fäden aus einem wärmeschrumpfbaren Polymermaterial hergestellt ist.

7. Verfahren nach Anspruch 1 oder 3, **dadurch gekennzeichnet, dass** das Verstärkungselement (20) eine Verstärkungsummantelung (38) ist.

8. Verfahren nach Anspruch 7, **dadurch gekennzeichnet, dass** die Verstärkungsummantelung (38) durch einen spiralförmig um das Stahlkabel gewickelten Stahldraht gebildet wird.

9. Verfahren nach Anspruch 1 oder 3, **dadurch gekennzeichnet, dass** das Verstärkungselement (20) aus einer Hülse (30) besteht, wobei die Hülse (30) ein im Wesentlichen zylindrisches Element mit einem Durchgangsloch ist, und eine Einrichtung zum Einführen des Stahlkabelabschnitts aufweist, auf dem sich die Unterbrechungsstelle (18) befindet.

10. Verfahren nach Anspruch 9, **dadurch gekennzeichnet, dass** die Einrichtung zum Einführen des Stahlseilabschnitts, auf dem sich die Unterbrechungsstelle (18) befindet, durch Teilen der Hülse in zwei Teile gebildet wird, wobei die beiden Teile entlang einer Erzeugenden (36) miteinander verbunden sind, derart, dass die Hülse durch eine geeignete Verschlusseinrichtung geöffnet und geschlossen werden kann.

11. Verfahren nach Anspruch 9, **dadurch gekennzeichnet, dass** die Einrichtung zum Einführen des Stahlkabelabschnitts, auf dem sich die Unterbrechungsstelle (18) befindet, mittels eines Schlitzes entlang einer Erzeugenden davon gebildet wird.

12. Diamantdraht (12) zum Schneiden von Steinmaterial, mit:
- einem mehrsträngigen Stahlkabel (13), das an den Enden durch Spleißen verbunden ist, um einen Ring zu bilden, und eine Anzahl von Strangunterbrechungsstellen (18) aufweist, an denen zwei Strangenden (14, 16) mit den Enden aneinander angeordnet sind, wobei die Unterbrechungsstellen (18) entlang des Stahlkabels (12) beabstandet sind;
- mehreren auf dem Stahlkabel angeordneten Buchsen-Wulst-Verbundelementen (22);
- einer Anzahl von Verstärkungselementen (20), die auf dem Stahlkabel (13) jeweils über einer entsprechenden Unterbrechungsstelle (18) angeordnet sind, um den Abschnitt des Stahlkabels (13) an der Unterbrechungsstelle (18) abzudecken; und
einer Kunststoffbeschichtung (40) die auf dem Stahlkabel (13) durch Spritzgießen ausgebildet ist, um die mehreren Buchsen-Wulst-Verbundelemente (22) und die Verstärkungselemente (20) zumindest teilweise abzudecken und stabil am Stahlkabel (13) zu fixieren.

13. Diamantdraht nach Anspruch 12, **dadurch gekennzeichnet, dass** das Verstärkungselement (20) ein gewebtes Element ist, das unter Verwendung von miteinander verwobenen Fäden aus einem Metallmaterial hergestellt ist.

14. Diamantdraht nach Anspruch 12, **dadurch gekennzeichnet, dass** das Verstärkungselement (20) ein gewebtes Element ist, das unter Verwendung von miteinander verwobenen Fäden aus einem Polymermaterial hergestellt ist.

15. Diamantdraht nach Anspruch 12, **dadurch gekennzeichnet, dass** das Verstärkungselement (20) ein gewebtes Element ist, das unter Verwendung von miteinander verwobenen Fäden aus einem wärmeschrumpfbaren Polymermaterial hergestellt ist.

16. Diamantdraht nach Anspruch 12, **dadurch gekennzeichnet, dass** das Verstärkungselement (20) eine Verstärkungsummantelung (38) ist.

17. Diamantdraht nach Anspruch 16, **dadurch gekennzeichnet, dass** die Verstärkungsummantelung (38) durch einen spiralförmig um das Stahlkabel gewickelten Stahldraht gebildet ist.

18. Diamantdraht nach Anspruch 12, **dadurch gekennzeichnet, dass** das Verstärkungselement (20) aus einer Hülse (30) besteht, wobei die Hülse (30) ein im Wesentlichen zylindrisches Element mit einem Durchgangsloch ist, auf dem sich der Stahlkabelabschnitt mit der Unterbrechungsstelle (8) positioniert ist, wobei die Hülse aus zwei Teilen besteht, die entlang einer Erzeugenden (36) miteinander verbunden sind.

## Revendications

1. Procédé de fabrication d'un fil diamanté (12) destiné à la coupe de matériaux pierreux, comprenant les étapes consistant à :
- produire une pluralité d'éléments de douille et de bague composites (22) ;
- insérer un câble d'acier (13) à l'intérieur de la pluralité d'éléments de douille et de bague composites (22) ;
- épisser les deux extrémités du câble d'acier (13) en formant ainsi un certain nombre de points d'interruption de brins (18) où deux extrémités de brins (14, 16) sont agencées bout-à-bout ; lesdits points d'interruption (18) étant espacés le long du câble d'acier (13) ; et
- appliquer un revêtement en plastique (40) sur le câble d'acier (13) par moulage par injection ;
ledit procédé étant **caractérisé par** le fait de comprendre en plus, avant l'étape d'application du revêtement en plastique (40), l'étape consistant à placer un certain nombre d'éléments de renfort (20) sur le câble d'acier (13) chacun d'eux étant positionné au-dessus d'un point d'interruption respectif (18), de sorte à recouvrir la section du câble d'acier (13) au niveau du point d'interruption (18), et de sorte que ledit revêtement en plastique (40) peut au moins en partie recouvrir lesdits éléments de douille et de bague composites (22) et lesdits éléments de renfort (20) et aussi fixer de manière stable lesdits éléments de douille et de bague composites (22) et lesdits éléments de renfort (20) sur ledit câble d'acier (13).

2. Procédé selon la revendication 1, **caractérisé en ce que** l'étape de positionnement des éléments de renfort (20) sur le câble d'acier (13) est réalisée avant l'étape d'épissage.

3. Procédé selon la revendication 1, **caractérisé en ce que** l'étape de positionnement des éléments de renfort (20) sur le câble d'acier (13) est réalisée après l'étape d'épissage.

4. Procédé selon l'une quelconque des revendications 1 et 2, **caractérisé en ce que** l'élément de renfort (20) est un élément tissé fabriqué à partir de fils entrelacés de matériau métallique.

5. Procédé selon l'une quelconque des revendications 1 et 2, **caractérisé en ce que** l'élément de renfort (20) est un élément tissé fabriqué à partir de fils entrelacés de matériau polymère.

6. Procédé selon l'une quelconque des revendications 1 et 2, **caractérisé en ce que** l'élément de renfort (20) est un élément tissé fabriqué à partir de fils entrelacés de matériau polymère thermorétractable.

7. Procédé selon l'une quelconque des revendications 1 et 3, **caractérisé en ce que** l'élément de renfort (20) est un enlacement de renfort (38).

8. Procédé selon la revendication 7, **caractérisé en ce que** l'enlacement de renfort (38) est formé par un fil d'acier enroulé en spirale autour du câble d'acier.

9. Procédé selon l'une quelconque des revendications 1 et 3, **caractérisé en ce que** l'élément de renfort (20) se compose d'un manchon (30), ledit manchon (30) étant un élément sensiblement cylindrique pourvu d'un trou traversant et comprenant des moyens permettant d'insérer la section de câble d'acier sur laquelle le point d'interruption (18) est situé.

10. Procédé selon la revendication 9, **caractérisé en ce que** lesdits moyens permettant d'insérer la section de câble d'acier sur laquelle le point d'interruption (18) est situé sont formés par le biais d'une division du manchon en deux parties, lesdites deux parties se réunissant le long d'une génératrice (36) de telle sorte que le manchon peut être ouvert et fermé à l'aide de moyens de fermeture appropriés.

11. Procédé selon la revendication 9, **caractérisé en ce que** lesdits moyens permettant d'insérer la section de câble d'acier sur laquelle le point d'interruption (18) est situé sont formés par le biais d'une fente le long d'une génératrice de ceux-ci.

12. Fil diamanté (12) destiné à la coupe de matériaux pierreux, comprenant :
- un câble d'acier multibrin (13) relié aux extrémités par épissage de sorte à former un anneau et doté d'un certain nombre de points d'interruption de brins (18) où deux extrémités de brins (14, 16) sont agencées bout-à-bout ; lesdits points d'interruption (18) étant espacés le long du câble d'acier (12) ;
- une pluralité d'éléments de douille et de bague composites (22) agencés sur ledit câble d'acier ;
- un certain nombre d'éléments de renfort (20) positionnés sur le câble d'acier (13) chacun d'eux étant placé au-dessus d'un point d'interruption respectif (18), de sorte à recouvrir la section du câble d'acier (13) au niveau dudit point d'interruption (18) ; et
- un revêtement en plastique (40) lequel est moulé par injection sur le câble d'acier (13) de sorte à recouvrir au moins en partie et à fixer de manière stable ladite pluralité d'éléments de douille et de bague composites (22) et lesdits éléments de renfort (20) sur ledit câble d'acier (13).

13. Fil diamanté selon la revendication 12, **caractérisé en ce que** l'élément de renfort (20) est un élément tissé fabriqué à partir de fils entrelacés de matériau métallique.

14. Fil diamanté selon la revendication 12, **caractérisé en ce que** l'élément de renfort (20) est un élément tissé fabriqué à partir de fils entrelacés de matériau polymère.

15. Fil diamanté selon la revendication 12, **caractérisé en ce que** l'élément de renfort (20) est un élément tissé fabriqué à partir de fils entrelacés de matériau polymère thermorétractable.

16. Fil diamanté selon la revendication 12, **caractérisé en ce que** l'élément de renfort (20) est un enlacement de renfort (38).

17. Fil diamanté selon la revendication 16, **caractérisé en ce que** l'enlacement de renfort (38) est formé par un fil d'acier enroulé en spirale autour du câble d'acier.

18. Fil diamanté selon la revendication 12, **caractérisé en ce que** l'élément de renfort (20) se compose d'un manchon (30), ledit manchon (30) étant un élément sensiblement cylindrique pourvu d'un trou traversant, sur lequel la section de câble d'acier avec le point d'interruption (8) est positionnée ; ledit manchon étant constitué de deux parties se réunissant le long d'une génératrice (36).
